# EUROPÄISCHE PATENTANMELDUNG

(11) **EP 1 361 111 A2**
(43) Veröffentlichungstag der Anmeldung: **12.11.2003**
(21) Anmeldenummer: 03007868.7
(22) Anmeldetag: 07.04.2003
(51) Int. Cl.: B60P 7/08

(54) **Halter für Spanngurte**

(30) Priorität: 02.05.2002 CH 7442002
(71) Anmelder: Wilhelm, Walter, 9200 Gossau (CH)
(72) Erfinder: Wilhelm, Walter, 9200 Gossau (CH)
(74) Vertreter: Stocker, Kurt

(57) **Zusammenfassung**

Am Haltegestänge (3), das den Laderaum eines Transportfahrzeuges (1) umgibt, werden Halter (4) angeordnet, die es ermöglichen einen Spanngurt (5, 5a) bereits vor dem Laden über dem für das Ladegut (7) bereitstehenden Raum auszulegen und mit dem einen Ende am Fahrzeug (1) zu befestigen. Nach dem Plazieren des Ladegutes (7) wird der Spanngurt (5, 5a) durch ziehen am freien Ende aus den Haltern (4) auf das Ladegut (7) fallen gelassen. Jeder Halter (4) umfasst eine Befestigungseinrichtung (8) zum Befestigen des Halters (4) am Gestänge (3) und einen Aufnahmeteil (4a) mit einem sich entlang einer Längsachse erstreckenden Aufnahmebereich zum Aufnehmen eines Spanngurtes (5, 5a) sowie mit einer Freigabeeinrichtung, welche den Spanngurt quer zur Längsachse vom Halter (4) freigeben kann.

## Beschreibung

Die Erfindung betrifft einen Halter für Spanngurte nach dem Oberbegriff des Anspruches 1.

Beim Beladen der Ladefläche von Transportfahrzeugen wird das Transportgut auf der Ladefläche plaziert und anschliessend mit Spanngurten fixiert. Dabei müssen Spanngurte über das Transportgut gelegt, beidseitig fixiert und gespannt werden. Häufig ist es schwierig und zeitaufwendig einen Spanngurt über das Transportgut zu legen. Wenn dazu eine Person auf das Transportgut klettert, so ist dies gefährlich, weil das Transportgut kippen und/oder diese Person vom Transportgut fallen könnte. Wenn die Person seitlich am äussersten Rand der Ladefläche steht und versucht den Spanngurt über das Transportgut zu werfen, kann sie sich dabei nur mit einer Hand halten und es besteht die Gefahr, dass die Person das Gleichgewicht verliert, oder der Spanngurt nicht am richtigen Ort zu liegen kommt.

Aus der DE 44 15 042 ist lediglich ein einhändig einhäng- und spannbares Spannteil bekannt. Der Spanngurt muss, wie oben beschrieben, mit unerwünschtem Aufwand und Gefahren über das Transportgut gelegt werden.

Der Erfindung liegt die Aufgabe zugrunde, eine Lösung zu finden mit der die Ladung einfach und gefahrlos gesichert werden kann.

Zur Lösung der Aufgabe wird ein Halter mit den Merkmalen des Anspruches 1 verwendet. Die abhängigen Ansprüche beschreiben alternative bzw. vorteilhafte Ausführungsvarianten.

Beim Lösen der Aufgabe wurde in einem ersten erfinderischen Schritt erkannt, dass ein Spanngurt nicht erst nach dem Beladen der Ladefläche über das Ladegut gelegt werden soll, sondern dass der Spanngurt bereits vor dem Laden über dem für das Ladegut bereitstehenden Raum ausgelegt werden soll. Weil der Laderaum der Transportfahrzeuge seitlich und oben von Haltegestängen umgeben ist, können an diesen Gestängen Halter angeordnet werden, die den Spanngurt während des Beladens halten. Nach dem Plazieren des Ladegutes wird der Spanngurt aus den Haltern auf das Ladegut fallen gelassen. In einem zweiten erfinderischen Schritt wurde erkannt, dass die Halter eine Auslöseeinrichtung umfassen müssen, welche aufgrund eines genügend hohen Zuges am Spanngurt oder gegebenenfalls aufgrund einer anderen Auslösebetätigung den Gurt quer zu seiner Längsrichtung aus dem Halter austreten lassen. Dazu umfasst der Halter eine Befestigungseinrichtung 8 zum Befestigen des Halters an einem Gestänge und einen Aufnahmeteil mit einem sich entlang einer Längsachse erstreckenden Aufnahmebereich zum Aufnehmen einer Spanngurte sowie mit einer Freigabeeinrichtung, welche den Spanngurt quer zur Längsachse vom Halter freigeben kann.

Gemäss einer speziellen Ausführungsform wird für das Halten des Gurtes ein im Schnitt c-förmiger Aufnahmeteil gegebenenfalls teilweise aus Federmaterial, insbesondere Federstahl, vorgesehen, so dass der Gurt beim offenen Abschnitt des c-förmigen Aufnahmeteiles herausgezogen werden kann, wobei die freien Enden des c-förmigen Teiles sich gegebenenfalls federnd vom durchgängigen Bereich wegbewegen und so den Austritt des Gurtes ermöglichen. Die Freigabeeinrichtung wird somit vom offenen Abschnitt und/oder den federnden freien Enden des c-förmigen Aufnahmeteiles gebildet. Es versteht sich von selbst, dass auch andere einfach auszulösende Aufnahmeteile, beispielsweise solche mit unter Zug ausrastenden Elementen, mit Haftbereichen oder mit aufreissbaren Klettverbindungen vorgesehen werden können.

Nebst dem Aufnahmeteil für den Gurt muss der Halter eine Befestigungseinrichtung umfassen, mit der er an einem Teil des Haltegestänges befestigt werden kann. Für eine Verspannung in Querrichtung der Ladefläche werden beispielsweise an einer oberen Querstange des Haltegestänges zwei Halter angeordnet. Der Spanngurt wird durch diese beiden Halter geführt, bzw. in diese eingelegt. Dadurch kann der Spanngurt auf einer Fahrzeugseite am Fahrzeug befestigt und von den beiden Haltern oberhalb des Ladegutes gehalten zur anderen Fahrzeugseite geführt werden. Nach dem Plazieren des Ladegutes ermöglicht die Auslöseeinrichtung das Fallenlassen des Gurtes auf das Ladegut. Anschliessend wird das freie Ende des Gurtes in eine Spanneinrichtung eingezogen, die am freien Ende eines kurzen Spanngurtabschnittes angeordnet ist. Der kurze Spanngurtabschnitt wird mit dem anderen Ende an einem Einhängelement eingehängt und zusammen mit dem über das Ladegut gelegten Gurt gespannt. Mit dieser Lösung kann die Ladung einfach und gefahrlos gesichert werden.

Die Befestigungseinrichtung umfasst einen Kontaktbereich, zum Anlegen an einen Gestängebereich und eine Festsetzeinrichtung zum Festsetzen des Kontaktbereiches. Der Kontaktbereich ist beispielsweise formschlüssig an den Gestängebereich angepasst. Bei einem Gestänge in der Form eines Rechteckprofiles ist der Kontaktbereich etwa als Rechteckprofil mit einer offenen Seite ausgebildet, so dass er auf das Gestänge aufgesteckt werden kann. Die Festsetzeinrichtung umfasst beispielsweise zumindest eine Klemmschraube, gegebenenfalls aber auch zumindest ein Einrastelement. Mit einer Klemmschraube wird der Halter am Gestänge unverschiebbar festgesetzt. Zum Befestigen und Entfernen eines Halters muss die Schraube etwas ein- bzw. ausgeschraubt werden. Eine Festsetzeinrichtung mit Einrastelement kann so ausgebildet werden, dass der Halter auf das Gestänge aufgesteckt und gegebenenfalls entlang des Gestänges verschoben werden kann. Dabei wird beim Aufstecken mindestens ein Einrastelement so am Gestänge einrasten, dass der Halter den Gurt tragen kann und der Halter auch beim Herausreissen des Gurtes am Gestänge bleibt. Durch das Lösen des mindestens einen Einrastelementes kann der Halter wieder vom Gestänge entfernt werden. Es versteht sich von selbst, dass Halter auch einfach mit einer Schraube oder gegebenenfalls einer Schweiss- oder Lötverbindung an gewünschten Stellen des Gestänges befestigt werden können.

Die Zeichnungen erläutern die erfindungsgemässe Lösung anhand eines Ausführungsbeispieles. Dabei zeigt
Fig. 1 eine rückseitige Ansicht eines Lastwagens;
Fig. 2 eine stirnseitige Ansicht eines Halters mit Federlippen;
Fig. 3 eine stirnseitige Ansicht eines Halters mit Einrastelementen;
Fig. 4a eine stirnseitige Ansicht eines Halters mit festen Lippen und

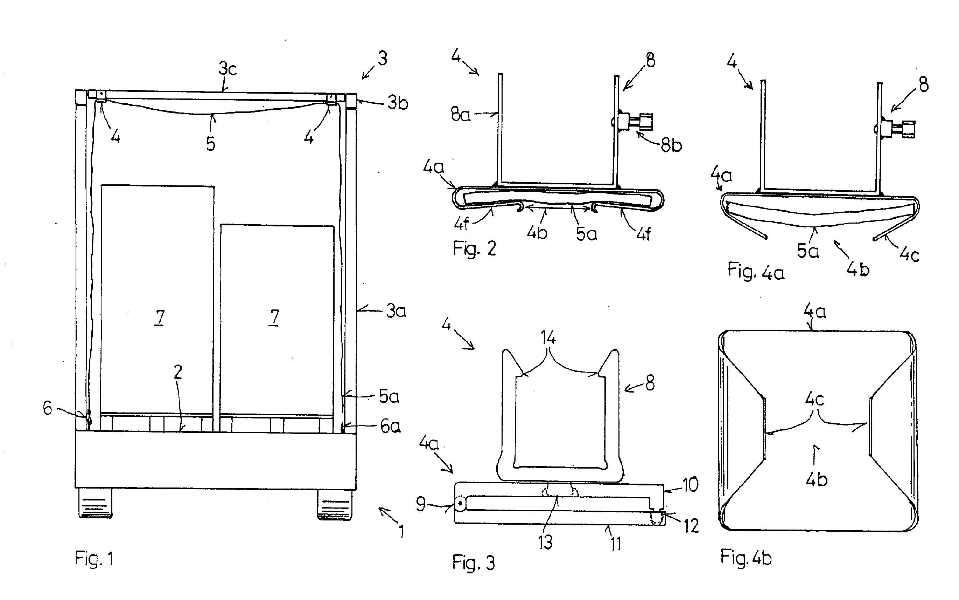

Fig. 4a eine Ansicht von unten des Halters gemäss Fig. 4a

Fig. 1 zeigt ein Transportfahrzeug 1 mit einer Ladefläche 2 und einem Haltegestänge 3, welches vertikale Säulen 3a, horizontale Längsträger 3b und horizontale Querträger umfasst. Das Haltegestänge 3 dient zum Tragen einer den Laderaum abschliessenden Blache. Am Haltegestänge 3, insbesondere an mindestens einem Querträger 3c, können Halter 4 angeordnet werden, die einen Spanngurt 5 während des Beladens halten. Der Spanngurt 5 wird etwa durch zwei an je einem Endbereich des Querträgers 3c angeordnete Halter 4 geführt, bzw. in diese eingelegt. Auf einer Fahrzeugseite wird der Spanngurt 5 über eine Verbindungsanordnung 6 am Fahrzeug 1 befestigt. Wenn auf der Ladefläche 2 Ladegut 7 unter dem Spanngurt 5 plaziert ist, wird der Spanngurt aus den Haltern auf das Ladegut fallen gelassen. Dazu umfassen die Halter 4 eine Auslöseeinrichtung, welche aufgrund eines genügend hohen Zuges am freien Ende 5a des Spanngurtes 5 oder gegebenenfalls aufgrund einer anderen Auslösebetätigung den Gurt aus den beiden Haltern 4 austreten lassen. Anschliessend wird das freie Ende des Spanngurtes 5 in eine nicht dargestellte Spanneinrichtung eingezogen, die am freien Ende eines kurzen Spanngurtabschnittes angeordnet ist. Der kurze Spanngurtabschnitt wird mit dem anderen Ende an einem Einhängelement 6a eingehängt und zusammen mit dem über das Ladegut 7 gelegten Spanngurt 5 gespannt.

Fig. 2 zeigt einen Halter 4 mit einem darin gehaltenen Spanngurt-Abschnitt 5a. Gemäss der dargestellten Ausführungsform umfasst der Halter 4 einen im Schnitt c-förmigen, den Spanngurt 5a teilweise umschliessenden, Aufnahmeteil 4a, welcher gegebenenfalls teilweise, vorzugsweise aber vollständig aus Federmaterial, insbesondere aus Federstahl, besteht. Der Aufnahmeteil 4a bildet einen im Querschnitt schlitzförmigen Aufnahmebereich zum Aufnehmen eines Bandes. Der Spanngurt kann beim offenen Abschnitt 4b des c-förmigen Aufnahmeteiles 4a aus dem Halter 4 herausgezogen werden, wobei die freien Enden des c-förmigen Teiles sich als Federlippen 4f federnd vom durchgängigen Bereich wegbewegen und so den Austritt des Spanngurtes 5a ermöglichen bzw. erleichtern. Der Aufnahmeteil 4a ist etwas breiter als der Spanngurt 5a, wobei häufig Spanngurte 5 mit einer Breite von 50mm verwendet werden. Die Federeigenschaft der Federlippen 4f und die Grösse des offenen Abschnittes 4b des c-förmigen Aufnahmeteiles 4a müssen so gewählt werden, dass der Spanngurt 5a seitlich genügend gehalten ist und gegebenenfalls durch den Halter 4 nachgezogen werden kann ohne aus dem Halter 4 zu springen.

Die Federeigenschaft der Federlippen 4f und/oder die Berandungsform sowie die Grösse des offenen Abschnittes 4b müssen zudem so gewählt sein, dass ein am einen Ende befestigter Spanngurt 5 durch Ziehen am freien Ende aus dem Halter 4 gerissen werden kann. Bei Haltern 4 mit einem etwa 50mm breiten Aufnahmeteil 4a hat der offene Abschnitt 4b vorzugsweise eine Breite im Bereich von 10 bis 30mm, insbesondere aber von 15 bis 25mm. Bei Spanngurten 5 mit anderen Breiten ist auch der Aufnahmeteil 4a und die Breite des offenen Abschnitt an den Spanngurt 5 angepasst. Der offene Abschnitt erstreckt sich vorzugsweise über einen Bereich von 20 bis 60%, insbesondere aber von 35 bis 57%, der Breite des Aufnahmeteiles 4a. In der dargestellten Ausführungsform ist der offene Abschnitt 4b in der Mitte des Aufnahmeteiles 4a angeordnet. Es versteht sich von selbst, dass der offene Abschnitt 4b auch gegen eine Seite hin verschoben ausgebildet werden kann, indem die beiden Federlippen 4f unterschiedlich gross ausgebildet werden. Die Halteeigenschaft des Aufnahmeteiles 4a und die Möglichkeit den Spanngurt aus dem Aufnahmeteil 4a herauszureissen hängen auch von der Quer-Steifheit des Spanngurtes ab. Die Halter 4 werden vorzugsweise so ausgelegt, dass sie mit den gängigen Spanngurten die gewünschte Halte- und Freigabe-Eigenschaft erzielen. Der Halter 4, insbesondere der Aufnahmeteil 4a, hat in seiner Längsrichtung vorzugsweise eine Ausdehnung in einem Bereich von 30 bis 90mm, insbesondere von im wesentlichen 50mm. Die Federlippen 4f sind dadurch genügend stabil um sehr viele Ausreisszyklen ohne Beschädigung bzw. Bruch zu überstehen.

Nebst dem Aufnahmeteil 4a für den Spanngurt 5 umfasst der Halter 4 eine Befestigungseinrichtung 8, mit der er an einem Teil des Haltegestänges 3 befestigt werden kann. Die dargestellte Befestigungseinrichtung 8 umfasst einen formschlüssig an den Gestängebereich angepassten Kontaktbereich 8a in der Form eines Rechteckprofiles mit einer offenen Seite, so dass er auf ein Rechteckprofil des Gestänges 3 aufgesteckt werden kann. Um den Kontaktbereich 8a am Gestänge 3 festzusetzen, umfasst die Befestigungseinrichtung 8 eine Festsetzeinrichtung, beispielsweise zumindest ein Gewinde mit einer Klemmschraube 8b, die gegen das Gestänge 3 geschraubt wird. Die Befestigungseinrichtung 8 ist im dargestellten Beispiel mit einer Schweiss- oder Lötverbindung am Aufnahmeteil 4a befestigt. Es versteht sich von selbst, dass dafür auch eine Schraub- oder Nietverbindung eingesetzt werden kann.

Fig. 3 zeigt einen Halter 4, dessen Aufnahmeteil 4a zwei über ein Schwenkgelenk 9 miteinander verbundene Schenkel 10 und 11 umfasst. Am freien Ende der Schenkel 10, 11 sind diese über eine Einrastverbindung 12, beispielsweise in der Form einer Druckknopf-Verbindung, verbindbar. Die Einrastverbindung 12 ist so ausgelegt, dass ein Spanngurt unter genügend hohem Zug die Einrastverbindung 12 öffnet. Nach dem Öffnen der Einrastverbindung 12 schwenkt ein zweiter Schenkel 11 nach unten aus und gibt den Spanngurt frei. Ein erster Schenkel 10 ist mit der Befestigungseinrichtung 8 verbunden. Im dargestellten Beispiel ist die Verbindung als Drehverbindung 13 ausgebildet, wobei ein vorstehender Zapfen der Befestigungseinrichtung 8 formschlüssig an einer Öffnung des ersten Schenkels 10 befestigt ist. Die Befestigungseinrichtung 8 ist u-förmig ausgebildet und umfasst zwei Einrastelemente 14, die beim Aufstecken des Halters 4 auf ein Rechteckprofil seitlich nach aussen federn und dann am Profil einrasten. Zum Entfernen eines Halters 4 werden die Einrastelemente 14 etwas nach aussen gedrückt. Ein Halter 4 gemäss Fig. 3 kann zumindest teilweise aus Kunststoff hergestellt werden. Bei der Verwendung von Kunststoff müssen seine Komponenten eine grössere Mächtigkeit aufweisen als bei einer Ausführung aus Metall.

Es versteht sich von selbst, dass anstelle der Einrastverbindung 12 auch eine Klettverbindung vorgesehen werden könnte. Bei einer Klettverbindung wäre es zweckmässig anstelle des Schwenkgelenkes 9 und des zweiten Schenkels 11 lediglich ein Band einzusetzen, das sich vom ersten Schenkel 10 um den Spanngurt erstreckt und am freien Ende eine Klettfläche aufweist, die mit einer entsprechenden Klettfläche am ersten Schenkel 10 zusammenwirkt. Es wäre aber auch möglich, am ersten Schenkel 10 lediglich eine Haftfläche, beispielsweise mit einem Harz auszubilden, an welche der Spanngurt angedrückt wird. Die anhand der Beispiele beschriebenen Merkmale können beliebig kombiniert werden.

Ein besonders einfach aufgebauter und zweckmässiger Halter 4 ist auf Fig. 4a und 4b dargestellt. An der Befestigungseinrichtung 8 ist ein im Schnitt c-förmiger Aufnahmeteil 4a angeordnet, in dem ein Spanngurt-Abschnitt 5a gehalten ist. Die beidseits des offenen Abschnittes 4b anschliessenden festen Lippen 4c halten den Spanngurt zurück, weil dieser aufgrund seiner Quersteifigkeit bei kleinen Kräften gegen unten nicht aus dem Halter 4 hinaus rutscht. Erst bei einer genügend grossen Entnahmekraft fällt der Spanngurt unter Verformung in Querrichtung aus dem Aufnahmeteil 4a hinaus. Die Ausrichtung der festen Lippen 4c und die Ausdehnung des offenen Abschnittes sind so gewählt, dass der eingelegte Spanngurt bei der gewünschten Zugkraft aus dem Aufnahmeteil 4a heraus gleitet. Der Winkel zwischen einer festen Lippe 4c und der Verbindungsfläche zwischen den beiden Lippen liegt etwa im Bereich von 20° bis 50°, vorzugsweise von 35° bis 47°. Es hat sich gezeigt, dass die in Fig. 4b dargestellte Form der festen Lippen 4c die gewünschten Halte- und Freigabeeigenschaften erzielt. Die Breite der festen Lippen 4c nimmt gegen den offenen Abschnitt 4b hin ab. Das Einlegen und Herausziehen des Spanngurtes ist bei der dargestellten Ausführungsform mit kleinem Aufwand möglich. Eine Beschädigung de Spanngurtes beim Herausziehen wird vermieden.

## Patentansprüche

1. Halter (4) für Spanngurte (5), **gekennzeichnet durch** eine Befestigungseinrichtung (8) zum Befestigen des Halters (4) an einem Gestänge (3) und einen Aufnahmeteil (4a) mit einem sich entlang einer Längsachse erstreckenden Aufnahmebereich zum Aufnehmen eines Spanngurtes (5, 5a) sowie einer Freigabeeinrichtung, welche den Spanngurt (5, 5a) quer zur Längsachse vom Halter (4) freigebbar macht.

2. Halter (4) nach Anspruch 1, **dadurch gekennzeichnet, dass** das Aufnahmeteil (4a) im Querschnitt c-förmig ist und seine im Querschnitt freien Enden als Lippen (4c, 4f) ausgebildet sind, wobei der Spanngurt (5, 5a) durch einen offenen Abschnitt (4b) zwischen den freien Enden des c-förmigen Aufnahmeteiles (4a) quer zur Längsachse aus dem Halter (4) herausgezogen werden kann.

3. Halter (4) nach Anspruch 2, **dadurch gekennzeichnet, dass** das Aufnahmeteil (4a) zumindest teilweise, vorzugsweise aber vollständig aus Federstahl gebildet ist.

4. Halter (4) nach Anspruch 2 oder 3, **dadurch gekennzeichnet, dass** der Winkel zwischen einer Lippe (4c) und der Verbindungsfläche zwischen den beiden Lippen (4c) im Bereich von 20° bis 50°, vorzugsweise von 35° bis 47°, liegt.

5. Halter (4) nach einem der Ansprüche 2 bis 4, **dadurch gekennzeichnet, dass** sich der offene Abschnitt (4b) über einen Bereich von 20 bis 60%, vorzugsweise aber von 35 bis 57%, der Breite des Aufnahmeteiles (4a) erstreckt.

6. Halter (4) nach einem der Ansprüche 2 bis 5, **dadurch gekennzeichnet, dass** der Aufnahmeteil (4a) entlang der Längsachse eine Ausdehnung in einem Bereich von 30 bis 90mm, vorzugsweise von im wesentlichen 50mm, aufweist.

7. Halter (4) nach einem der Ansprüche 1 bis 6, **dadurch gekennzeichnet, dass** die Befestigungseinrichtung (8) einen formschlüssig an einen Gestängebereich angepassten Kontaktbereich (8a), vorzugsweise in der Form eines Rechteckprofiles mit einer offenen Seite, aufweist.

8. Halter (4) nach einem der Ansprüche 1 bis 7, **dadurch gekennzeichnet, dass** die Befestigungseinrichtung (8) eine Festsetzeinrichtung, vorzugsweise zumindest ein Gewinde mit einer Klemmschraube (8b), gegebenenfalls aber zumindest ein Einrastelement (14), umfasst.
